# EUROPÄISCHE PATENTANMELDUNG

(11) **EP 2 149 347 A2**
(43) Veröffentlichungstag der Anmeldung: **03.02.2010**
(21) Anmeldenummer: 09164265.2
(22) Anmeldetag: 01.07.2009
(51) Int. Cl.: A61C 13/20, H05B 6/80

(54) **Vorrichtung zur Erwärmung von Formteilen, insbesondere dentalkeramischen Formteilen**

(30) Priorität: 29.07.2008 DE 102008035240
(71) Anmelder: Ivoclar Vivadent, 9494 Schaan (LI)
(72) Erfinder: Jussel, Rudolf, A-6806 Feldkirch-Tosters (AT); Laubersheimer, Jürgen, Dr., CH-9470 Buchs (CH)
(74) Vertreter: Baronetzky, Klaus

(57) **Zusammenfassung**

Die Erfindung betrifft Vorrichtung zur Erwärmung von Formteilen, insbesondere dentalkeramischen Formteilen, mit einem Mikrowellengenerator oder einer Induktions-Heizvorrichtung, die einen Suszeptor mit elektromagnetischer Strahlung beaufschlagen, wobei der Suszeptor das Formteil umgibt, insbesondere nach der Art eines beispielsweise geschlossenen Gefäßes, welches elektromagnetische Strahlung absorbiert und Wärmestrahlung zum Formteil hin abgibt und die elektromagnetische Strahlung den Suszeptor 16 aufheizt und der Suszeptor 16 das Formteil 18 von der elektromagnetischen Strahlung abschirmt.

## Beschreibung

Die Erfindung betrifft eine Vorrichtung zur Erwärmung von Formteilen mit Mikrowellen oder Magnetfeldern, insbesondere zur Erwärmung von dentalkeramischen Formteilen, gemäß dem Oberbegriff von Anspruch 1.

Es ist bereits seit längerem bekannt, dass Suszeptoren für die Erwärmung von Gegenständen wie Formteilen eingesetzt werden können, um eine gleichmäßige Erwärmung von Formteilen sicherzustellen.

Dentalkeramiken, die häufig Oxidkeramiken sind, beispielsweise Zirkondioxid, koppeln bei Temperaturen von unter 700°C ausgesprochen schlecht an Mikrowellen an oder sind nicht magnetisierbar. Daher wird für die Erwärmung derartiger Keramiken typischerweise ein sog. Suszeptor eingesetzt, der die Mikrowellen-Strahlung absorbiert und in Form von Wärmestrahlung weitergibt. Typische Suszeptoren weisen bei hohen Temperaturen von mehr als 1000°C verminderte Absorbtionseigenschaften auf, so dass bei hohen Temperaturen die Formteile dann unmittelbar durch die Mikrowellen-Strahlung erwärmt werden, zusätzlich zur indirekten Erwärmung durch die Suszeptoren. Dieses Verhalten ist erwünscht, um einen möglichst hohen Wirkungsgrad zu erreichen und von dem Mikrowellengenerator - meist über einen Hohlleiter - in den Mikrowellenofen eingekoppelte Mikrowellen-Strahlung möglichst gut auszunutzen. Typischerweise lässt sich so ein Wirkungsgrad von um 60 % erreichen.

Andererseits ist es bei nicht-flüssigen zu erwärmenden Gegenständen, beispielsweise auch bei Formteilen, erwünscht, eine Vergleichmäßigung der Erwärmung zu gewährleisten um beispielsweise thermischen Verzug in den Formteilen zu vermeiden. Hierzu ist es bereits vorgeschlagen worden, das oder die Formteile thermisch möglichst gut an die Suszeptoren anzukoppeln, um so für eine gleichmäßige Erwärmung zu sorgen. Man kann diese Maßnahme auch mit der Verwendung eines sog. Drehtellers kombinieren, bei welchem Drehteller entweder das Formteil mit Suszeptor oder der Mikrowellenstrahler oder mindestens die Mikrowellen-Strahlung kontinuierlich gedreht wird, um punktuelle Erwärmungen an einer bestimmten Stelle zu vermeiden.

Vereinzelt ist es auch bereits vorgeschlagen worden, eine Suszeptorenschicht nach der Art einer Paste auf die Oberfläche der Formteile aufzubringen, was allerdings den Nachteil hat, dass dann der Suszeptor für jedes zu erwärmende Formteil erneuert werden muss, und dann nicht möglich ist, wenn Verunreinigungen des durch Fremdstoffe ein Problem darstellen.

Aus dem gleichen Grund verbietet sich bei Dentalkeramiken typischerweise das Einmischen von Kohlenstoff oder Karbiden in die Dentalkeramik selbst, da hierdurch die erwünschten physikalischen Eigenschaften, die sich durch einen Sintervorgang erzielen lassen, erheblich beeinträchtigt würden.

Aus der WO 00/78243 ist die Verwendung von Mikrowellen-Strahlung zum Aufheizen der Dentalkeramik auf die Brenntemperatur der Dentalkeramik grundsätzlich bekannt geworden. Auch bei dieser Lösung wird ein Suszeptorelement verwendet, um insofern eine indirekte Erwärmung sicherzustellen, wobei spezielle Maßnahmen für die Temperaturmessung erforderlich sind.

In diesem Zusammenhang und speziell bei Dentalkeramiken stellt eine lokale Überhitzung ein besonderes Problem dar. In vorteilhafter Ausgestaltung der Lösung gemäß der WO 00/78243 soll bei dieser Lösung ein speziell abgestimmter Resonator verwendet werden, der an seiner Innenwandung ein dünnes Blech aus Platin aufweisen soll, das Teil des Resonators ist. Über spezielle eingekoppelte Mikrowellen-Strahlung soll der Ausbildung von Temperaturgradienten begegnet werden, um doch im Ofeninnenraum eine im Wesentlichen einheitliche Temperatur zu erzeugen.

Hierzu soll das herzustellende Formteil aus Dentalkeramik von einer rotierenden Feldverteilung beaufschlagt werden, wozu ein an sich bekannter Drehteller verwendet wird.

Wenn andererseits ein nicht nicht-kreissymmetrisches Formteil verwendet wird, beeinflusst die Drehposition die Feldverteilung im Resonator, gerade dann, wenn ein vergleichsweise kleiner Resonator und ein vergleichsweise großes Formteil verwendet wird.

Andererseits sind gerade große Formteile wie beispielsweise mehrgliedrige Brücken besonders empfindlich, was Temperaturgradienten angeht. Insbesondere wurde festgestellt, dass eine lokale zu starke Erwärmung an der Oberfläche eines dentalkeramischen Formteils zu einer Materialschädigung führen kann, so dass das herzustellende Dentalrestaurationsprodukt zu wünschen übrig lässt.

Ferner ist es seit längerem bekannt, beispielsweise aus der EP 294 983 A2, keramische Materialien, die mikrowellen-absorbierend sind, als Suszeptoren zu verwenden. Bevorzugt werden ungesinterte keramische Massen verwendet, da die Absorbtionseigenschaften ungesinterter keramischer Massen als überlegen angesehen werden. Dies bedingt andererseits, dass derartige Massen typischerweise für höhere Betriebstemperaturen, wie sie beispielsweise für das Sintern von keramischen Formteilen erforderlich sind, als nicht in Frage kommend angesehen werden.

Ferner ist es seit noch längerer Zeit bekannt, elektrisch leitfähige, meist resistive, Beschichtungen als Mikrowellenfalle einzusetzen. Ein Beispiel hierfür lässt sich aus der US 3,853,612 entnehmen. Man hat derartige Materialen verwendet, auch wenn sie aufgrund ihrer vergleichsweise geringen Masse relativ wenig Wärme bei höheren Temperaturen abgeben, im Gegensatz zu keramischen Suszeptoren.

Demgegenüber liegt der Erfindung die Aufgabe zugrunde, eine Vorrichtung gemäß dem Oberbegriff von Anspruch 1 zu schaffen, die für die Herstellung von Formteilen, insbesondere Dentalkeramiken, noch besser geeignet ist und insbesondere auch unterschiedlich geformten Dentalkeramiken Rechnung trägt.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, die Erwärmung der bevorzugt dentalkeramischen Formteile vollständig oder nahezu vollständig durch eine gegenüber Mikrowellen-Strahlung modifizierte Art der Wärmeübertragung stattfinden zu lassen. Bevorzugt ist hierzu ein doppelt dichter, kombinierter Suszeptor vorgesehen, der einerseits aus einem keramischen Suszeptormaterial wie Siliziumkarbid besteht, und andererseits, an seiner Innenseite, aus einem metallischen, mindestens halbleitenden oder sonstigem Suszeptor mit hoher Dichte bestehen kann. Dieser "Innensuszeptor" kann auch als Mikrowellen-Reflektor verwendet werden, so dass die durch den keramischen Suszeptor noch zunächst hindurchtretende Mikrowellen-Strahlung an der Innenseite reflektiert wird und dann erneut den Suszeptor durchtritt, um erneut absorbiert werden zu können.

Damit wird erfindungsgemäß erreicht, dass praktisch die doppelte wirksame Wandstärke des Suszeptors zur Verfügung steht, was insofern einen erheblichen Fortschritt hinsichtlich der Reduktion der erforderlichen Massen, aber auch der räumlichen Verhältnisse darstellt.

Als Haupt-Suszeptor können beliebige geeignete Materialen verwendet werden, die bereits bei niedrigen Temperaturen bis in den Hochtemperaturbereich hinein mikrowellen-strahlung-absorbierend wirken. Unter niedrigen Temperaturen versteht man beispielsweise Raumtemperatur und darunter. Unter hohen Temperaturen sind hier beispielsweise Temperaturen von 1.000°C, 1.100°C oder 1.200°C, aber auch noch darüber zu verstehen. Bevorzugt werden für den keramischen Suszeptor Materialien mit einer besonders hohen Sintertemperatur verwendet. Es kann beispielsweise ausgewählt werden aus Siliziumkarbid, Titankarbid, Zirkonkarbid, Hafniumkarbid, Vanadiumkarbid, Tantalkarbid, Molybdänkarbid, Niobkarbid, Siliziumborid, Hafniumborid, Zirkoniumborid, Siliziumnitrid, Zirkoniumnitrid, Calciumborid oder Mischungen dieser. Weitere wären noch Diamant oder Graphit. Besonders günstig ist es, wenn die keramischen Massen, die auch ein keramisches Bindemittel aufweisen können, nicht hygroskopisch sind. Hierdurch wird verhindert, dass das aufgenommene Wasser durch den Dipoleffekt verdampft und durch seine Volumenvergrößerung die keramische Masse schädigt oder zerstört.

Als Material für die Innenschicht des erfindungsgemäßen Suszeptors wird als Mikrowellenabschirmung oder durch Induktion magnetisch aufheizbar bevorzugt ein metallisches Material, z.B. Platin verwendet. Dies kann durch Verwendung von Metallen geschehen, die bei hoher Temperatur aufgedampft werden und bei der für die Sinterung der Formteile erforderlichen Temperatur stabil sind. Die Metallisierung wirkt im Falle von Mikrowellenfeldern dann wie ein faradayischer Käfig, so dass die Mikrowellen-Strahlung als Wärmeübertragungsmechanismus ausscheidet. Der Suszeptor erwärmt daher das Formteil erfindungsgemäß über einen anderen Wärmeübertragungsmechanismus, bevorzugt über Infrarotstrahlung oder Wärmeleitung.

Während erfindungsgemäß die Beaufschlagung mit Mikrowellen als Primärstrahlung bevorzugt ist, kommt es auch in Betracht, elektromagnetische Induktionen als Primär-Wärmeübertragungsmedium zu verwenden. Der sekundäre Wärmeübertragungsmechanismus, also vom Suszeptor zum Formteil, ist stets demgegenüber verschieden und ist beispielsweise durch Wärmekonvektion, Wärmestrahlung oder Wäremleitung gebildet.

Bei induktiver Beaufschlagung der Suszeptoren ist es wichtig, dass die Suszeptoren die aufgebrachte Induktionswärme vollständig absorbieren. Hierzu können geeignete Maßnahmen getroffen werden, beispielsweise indem der Suszeptor innen nach der Art eines Faradationkäfigs ausgebildet ist, oder sogar mit Mumetall ausgekleidet ist.

Auch hier entsteht eine signifikante Temperaturvergleichmäßigung und auch Strahlungsempfindliche Formteile lassen sich ohne weiteres in der gewünschten Weise erwärmen.

Überraschend lässt sich mit dieser Maßnahme sicherstellen, dass es nicht zu punktuellen Überhitzungen kommt, die das erfindungsgemäße Formteil schädigen würden. Mikrowellen-Strahlung erwärmt typischerweise die zu erwärmenden Gegenstände von der Oberfläche her und hat eine insofern eher geringe Eindringtiefe, gerade, wenn mit Frequenzen um 2,45 GHz gearbeitet wird, und nicht - wie es auch bekannt ist - mit Frequenzen um 900 MHz. Erfindungsgemäß wird verhindert, dass es bei großflächigen, aber feingliedrigen dentalkeramischen Formteilen zu lokalen Überhitzungen durch die insofern einen hohen Temperaturgradienten induzierende Mikrowellen-Strahlung kommt. Erfindungsgemäß ist vielmehr die Mikrowellen-Strahlung im Inneren des erfindungsgemäßen doppeldichten Suszeptors um mehr als den Faktor 100, typischerweise um den Faktor 10.000 reduziert, reduziert und spielt daher für die Erwärmung keine Rolle mehr oder eine untergeordnete. Überraschend lässt sich durch die insofern nahezu vollständig indirekte Beheizung des erfindungsgemäßen Formteils ein guter Wärmewirkungsgrad sicherstellen, gerade dann, wenn ein in seiner Form an das Formteil angepasste und insofern nicht zu großer Suszeptor verwendet wird.

Besonders günstig ist es in diesem Zusammenhang, wenn der Innenraum des erfindungsgemäßen Suszeptors mit einem guten Wärmeleiter ausgekleidet ist. Typischerweise ist Metall ein guter Wärmeleiter und daher geeignet, der Wärmevergleichmäßigung zu dienen. Bei einer Aufheizgeschwindigkeit des Suszeptors von beispielsweise 50°K/min und einer Größe des Suszeptors, der für dentalkeramische Formteile geeignet ist, und insofern lediglich wenige cm Innenraumlänge aufweist, lässt sich so ein Innenraum-Temperaturgradient von weniger als 5°, bevorzugt weniger als 3°, erreichen.

Die Innenraum-Auskleidung lässt sich in beliebiger geeigneter Weise herstellen.

Beispielsweise kann die Wand des Suszeptors einteilig oder mehrteilig ausgebildet sein. In Frage kommt hier für die Innenauskleidung eine hochverdichtete Keramikschicht, aber auch beispielsweise eine Keramikschicht, die mit Metallpulver angereichtert ist, eine metallische Beschichtung, eine aufgedampfte Metallschicht, eine aufplattierte Metallschicht, eine hochtemperaturfeste Halbleiterschicht oder dergleichen.

Typischerweise ist der Suszeptor in an sich bekannter Weise zweiteilig ausgebildet, beispielsweise als im Wesentlichen quaderförmiger Behälter mit Deckel. Besonders günstig ist es jedoch, den Suszeptor aus einer Kreisscheibe mit Suszeptor-Wandstärke aufzubauen, die von einem haubenförmig zylindrischen Suszeptor abgedeckt ist. Diese Lösung erlaubt es, das gesinterte Dentalformteil erschütterungsfrei auskühlen zu lassen, beispielsweise, indem der haubenförmige Deckel des Suszeptors abgenommen wird. Bei dieser Lösung ist es bevorzugt, zunächst den Suszeptor in geschlossener Form zusammen mit dem dort aufgenommenen gesinterten Dentalformteil auskühlen zu lassen, bis eine Vorverfestigung eingetreten ist. Sobald der Abkühl-Temperaturgradient deutlich abnimmt, kann dann die Haube des Suszeptors abgenommen werden und die Abkühlung insofern wieder beschleunigt werden.

Erfindungsgemäß ist der Suszeptor so ausgebildet, dass er im gesamten überstrichenen Temperaturbereich gute Absorbtionseigenschaften aufweist. Um die Mikrowellen-Dichtheit herzustellen, kann die Nahtstelle zwischen dem Suszeptor-Behälter und seinem Deckel auch nach der Art einer Labyrinthdichtung oder wenigstens wellig ausgebildet sein.

Es ist auch möglich, den Suszeptorbehälter durch eine elektrische Widerstandsheizung aufzuheizen, beispielsweise auf eine Temperatur von 700 oder 800°C, und die Mikrowellen-Strahlung einzuschalten, sobald diese Temperatur erreicht ist.

Anstelle der elektrisch leitfähigen Beschichtung aus einem Metall wie Platin kann auch eine Graphitbeschichtung verwendet werden, und etwaige Öffnungen, wie sie beispielsweise für die Durchströmung des Suszeptors mit einem Gas, ausgebildet sein können, können als Lambdafalle ausgebildet sein, entsprechend der Wellenlänge der verwendeten Mikrowellen-Strahlung.

Während erfindungsgemäß typischerweise eine feststehende und insofern mechanisch leichter zu realisierende Anordnung des Suszeptorbehälters bevorzugt ist, ist es auch möglich, einen Drehteller zu verwenden, der den Suszeptorbehälter einschließlich des Formteils dreht, oder das Mikrowellenfeld in an sich bekannter Weise rotieren zu lassen.

In einer weiteren vorteilhaften Ausgestaltung ist es vorgesehen, dass die Mikrowellenabschirmung das Verhältnis zwischen absorbierter und die Absorbierung durchtretender Mikrowellen-Strahlung auf mehr als 100:1, insbesondere mehr als 1000:1 und bevorzugt mehr als 10.000:1 erhöht.

In einer weiteren vorteilhaften Ausgestaltung ist es vorgesehen, dass der Suszeptor Mikrowellen-Strahlung absorbiert und Strahlung emittiert, deren Frequenz deutlich unterhalb von 2,455 GHz, insbesondere unterhalb von 900 MHz liegt.

In einer weiteren vorteilhaften Ausgestaltung ist es vorgesehen, dass die von dem Suszeptor emittierte Strahlung ein Emissionsmaximum im Infrarotbereich hat, insbesondere bei einer Wellenlänge von etwas unter 1000 µm, welche Strahlung bevorzugt nach der Art einer Gausskurve verteilt ist.

In einer weiteren vorteilhaften Ausgestaltung ist es vorgesehen, dass zwischen Suszeptor und Formteil ein anderer Wärmeübertragungsmechanismus als zwischen Mikrowellenofen und Suszeptor eingesetzt ist, insbesondere Konvektion, Strahlung und/oder Wärmeleitung.

In einer weiteren vorteilhaften Ausgestaltung ist es vorgesehen, dass der Suszeptor und/oder die Absorbierung mikrowellendicht ausgebildet ist.

In einer weiteren vorteilhaften Ausgestaltung ist es vorgesehen, dass die Mikrowellenabschirmung aus einem Mikrowellen stark absorbierenden und/oder einem Mikrowellen reflektierenden Material besteht, insbesondere Metall aufweist.

In einer weiteren vorteilhaften Ausgestaltung ist es vorgesehen, dass die Mikrowellenabschirmung durch ein Material mit einem besonders hohen Absorbtionskoeffizienten für Mikrowellen-Strahlung, insbesondere hochverdichtetes Siliziumkarbid, hergestellt ist.

In einer weiteren vorteilhaften Ausgestaltung ist es vorgesehen, dass das Formteil auf einem guten Wärmeleiter, insbesondere aus Metall, aufliegt, der in gutem thermischen Kontakt mit der Innenseite des Suszeptors ist.

In einer weiteren vorteilhaften Ausgestaltung ist es vorgesehen, dass ein Wärmeleiter innen in dem Suszeptor vorgesehen ist, der insbesondere in Kontakt mit dem Formteil ist und die Temperatur im Innenraum des Suszeptors vergleichmäßigt.

In einer weiteren vorteilhaften Ausgestaltung ist es vorgesehen, dass der Suszeptor - und ggf. der Wärmeleiter - einen Anschlussflansch für Gas aufweist, von welchem Gas der Suszeptor, und ggf. der Wärmeleiter, durchströmbar ist.

In einer weiteren vorteilhaften Ausgestaltung ist es vorgesehen, dass die Mikrowellenabschirmung innen an den Suszeptor und diesen auskleidend angebracht ist.

In einer weiteren vorteilhaften Ausgestaltung ist es vorgesehen, dass die Mirkrowellenabschirmung einstückig mit dem Suszeptor, insbesondere an seiner Innenwand durch Nachverdichtung dieser, hergestellt ist.

In einer weiteren vorteilhaften Ausgestaltung ist es vorgesehen, dass die Mikrowellenabschirmung auch bei Temperaturen von mehr als 1000° gemäß Anspruch 2 abschirmend wirkt.

In einer weiteren vorteilhaften Ausgestaltung ist es vorgesehen, dass im Strahlengang zwischen der Strahlenquelle und dem Formteil, insbesondere an der Innenwand des Suszeptors, eine Abschirmung, insbesondere eine Mikrowellen-Abschirmung, angeordnet ist, die die Zuleitung von elektromagnetischer Strahlung zum Formteil im welsentlichen vollständig verhindert.

In einer weiteren vorteilhaften Ausgestaltung ist es vorgesehen, dass das durch den Suszeptor gebildete Gefäß als Wärmebehandlungskammer mit homogenem Temperaturfeld ausgebildet ist, in welchem sich das oder diezu erwärmenden Formteile befinden.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: eine schematische Darstellung einer erfindungsgemäßen Vorrichtung zur Erwärmung von Formteilen, unter Darstellung eines Mikrowellenofens;
- Fig. 2: eine schematische Darstellung eines Suszeptors zur Verwendung in einer erfindungsgemäßen Vorrichtung, in einer ersten Ausführungsform;
- Fig. 3: eine schematische Darstellung eines Suszeptors zur Verwendung in einer erfindungsgemäßen Vorrichtung, in einer zweiten Ausführungsform;
- Fig. 4: eine schematische Darstellung eines Suszeptors zur Verwendung in einer erfindungsgemäßen Vorrichtung, in einer dritten Ausführungsform; und
- Fig. 5: eine schematische Darstellung eines Suszeptors zur Verwendung in einer erfindungsgemäßen Vorrichtung, in einer vierten Ausführungsform.

Die erfindungsgemäße Vorrichtung zur Erwärmung von Formteilen weist einen Mikrowellenofen 10 auf, der über einen Mikrowellengenerator, der hier nicht dargestellt ist, und einen Wellenleiter 12, mit Mikrowellen-Strahlung 14 beaufschlagt wird.

In dem Mikrowellenofen 10 ist ein erfindungsgemäßer Suszeptor 16 aufgenommen, der ein Formteil 18 umschließt und aufnimmt. In an sich bekannter Weise ist der behälterförmige Suszeptor 16 zentral in dem im dargestellten Ausführungsbeispiel zylinderförmigen Mikrowellenofen 10 aufgenommen. Es versteht sich, dass der Suszeptor 16 auch eine beliebige andere Form haben kann.

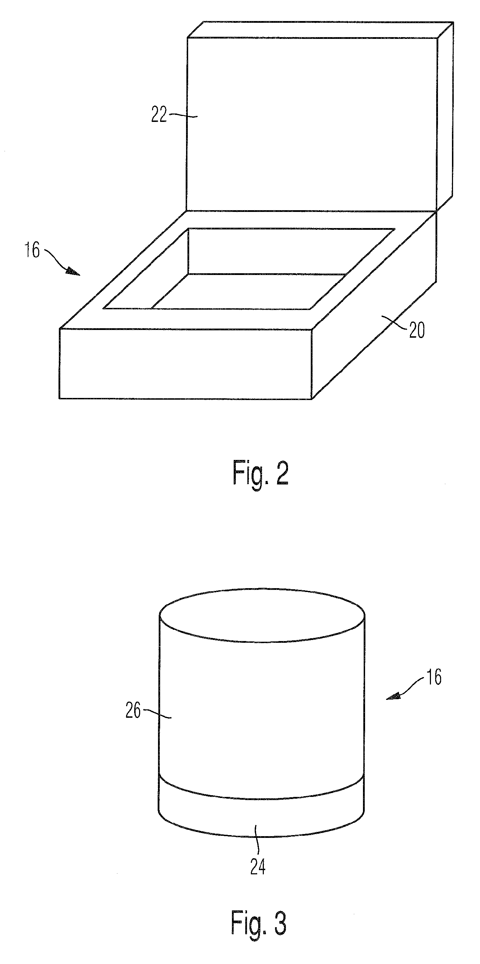

Hierzu ist aus Fig. 2 eine Quaderform eines Suszeptors 16 ersichtlich. Die Ausführungsform gemäß Fig. 2 zeigt einen zweiteiligen Suszeptor, der ein Suszeptorunterteil 20 und einen Suszeptordeckel 22 umfasst. Der Deckel 22 kann beispielsweise gelenkig mit dem Unterteil 20 verbunden sein, ist jedoch bevorzugt aufgelegt. Der Suszeptorbehälter weist eine gleichmäßige Wandstärke auf, die bevorzugt bei etwa 20 mm liegt, aber beispielsweise auch lediglich 0,1 mm stark sein kann oder eine Stärke von 50 mm aufweisen kann. Er besteht bevorzugt aus Siliziumkarbid und ist zur Herstellung der erfindungsgemäßen Mikrowellenabschirmung an der Innenseite mit Platin beschichtet, wobei die Beschichtung auch innen an dem in Fig. 2 aufgeklappt dargestellten Deckel ausgebildet ist.

Eine modifizierte Ausführungsform eines Suszeptors 16 ist aus Fig. 3 ersichtlich. Dort weist der Suszeptor 16 eine kreisförmige Basis 24 auf, die von einer Haube 26 abgedeckt ist. Das Formteil 18 ist dafür bestimmt, zentral auf der Basis 16 aufgenommen zu werden. Die Basis 24 ist hier mit einer gut wärmeleitfähigen Schicht beschichtet, die der Vergleichmäßigung der Temperatur im Innenraum des Suszeptors 16 dient.

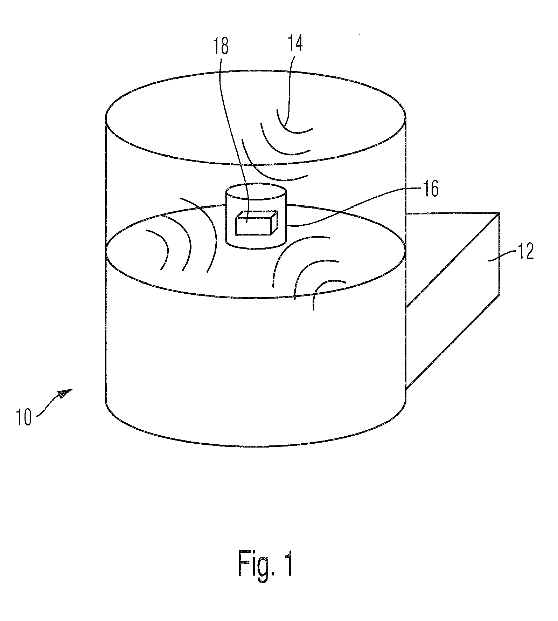

Sowohl bei der Ausführungsform gemäß Fig. 1 als auch bei der Ausführungsform gemäß Fig. 2 ist es vorgesehen, den Deckel 22 bzw. die Haube 26 formschlüssig auf dem Unterteil 20 bzw. der Basis 24 ruhen zu lassen. Hierzu ist mindestens ein Absatz, eine Nut oder eine sonstige Vertiefung vorgesehen, die dem Formschluss dient. Bevorzugt ist der Formschluss ringförmig nach der Art einer Dichtung ausgebildet, so dass Mikrowellen-Strahlung dort nicht eindringen kann.

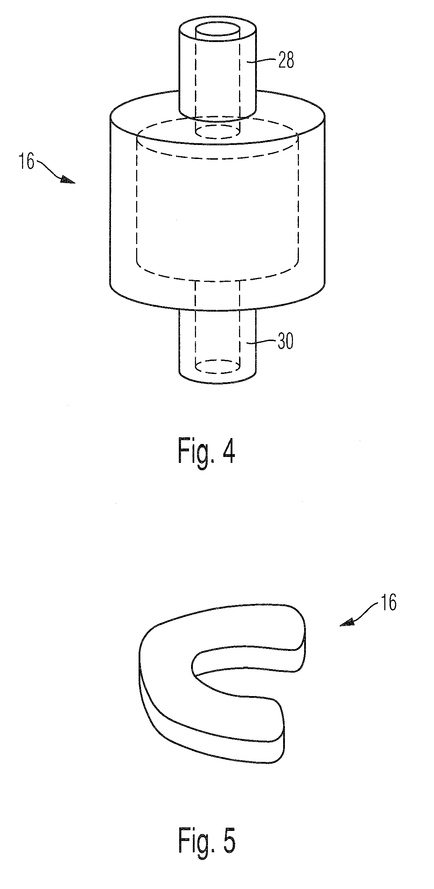

Eine modifizierte Ausgestaltung eines erfindungsgemäßen Suszeptors 16 ist aus Fig. 4 ersichtlich. Dort ist es vorgesehen, den Suszeptor von Gas durchströmen zu lassen. Hierzu sind Anschlüsse 28 und 30 vorgesehen, die zentral an gegenüberliegenden Seiten des Behälters, beispielsweise des im Wesentlichen zylindrischen Suszeptorbehälters 16 an dessen Oberseite und dessen Unterseite, ausgebildet sind. Die insofern vorgesehenen Öffnungen sind ebenfalls mit Suszeptormaterial gleicher Wandstärke umgeben. Die bestehenden Öffnungen sind jedoch als Lambdafalle ausgebildet, so dass Mikrowellen-Strahlung dort nicht eindringen kann.

Fig. 5 zeigt eine weiter modifizierte Ausgestaltung eines Suszeptors 16. Die vorgesehene Form des Suszeptors 16 entspricht in seiner Innenform im Wesentlichen der Außenform des herzustellenden Dentalformteils, beispielsweise einer Brücke, die mehrere Zähne überspannen soll. Auch hier ist bevorzugt eine zweiteilige Ausgestaltung vorgesehen, und es versteht sich, dass die Innenseite des Suszeptors 16 gemäß Fig. 5 ebenso wie die der anderen Ausführungsformen ebenfalls mit einer geeigneten Beschichtung als Mikrowellenabschirmung versehen ist.

Unter Abschirmung ist hier dasjenige zu verstehen, was üblicherweise der Fachmann für Elektrotechnik hierunter versteht:

Ein Gegenstand - hier der Suszeptor - ist zwischen der Strahlenquelle und einem abzuschirmenden Gegenstand - hier dem Formteil - derart angeordnet, dass die elektromagnetische Strahlung auch nicht über Umwege zu dem Formteil gelangen kann. Diese Abschirmung muss nicht einer Kapselung entsprechen, sondern ist beispielsweise vergleichbar mit der Abschirmung eines Koaxialkabels über das dortige Drahtgeflecht.

Wie bereits erläutert, wird durch die Abschirmung die das Formteil treffende Strahlung praktisch reduziert. Eine reine Wand geringer Höhe, über die die Mikrowellenstrahlung hinweg sich ausbreiten könnte, ist dementsprechend nicht als Abschirmung geeignet und zu verstehen, während ein Suszeptorring, also ein zweidimensionales Umgeben des Formteils, als geeignete Abschirmung angesehen werden kann.

## Patentansprüche

1. Vorrichtung zur Erwärmung von Formteilen, insbesondere dentalkeramischen Formteilen, mit einem Mikrowellengenerator oder einer Induktions-Heizvorrichtung, die einen Suszeptor mit elektromagnetischer Strahlung beaufschlagen, wobei der Suszeptor das Formteil umgibt, insbesondere nach der Art eines beispielsweise geschlossenen Gefäßes, welches elektromagnetische Strahlung absorbiert und Wärmestrahlung zum Formteil hin abgibt, **dadurch gekennzeichnet, dass** die elektromagnetische Strahlung den Suszeptor (16) aufheizt und der Suszeptor (16) das Formteil (18) von der elektromagnetischen Strahlung abschirmt.

2. Vorrichtung nach Anspruch 1, **dadurch gekennzeichnet, dass** im Strahlengang zwischen der Strahlenquelle und dem Formteil (18), insbesondere an der Innenwand des Suszeptors (16), eine Abschirmung, insbesondere eine Mikrowellen-Abschirmung, angeordnet ist, die die Zuleitung von elektromagnetischer Strahlung zum Formteil (18) im Wesentlichen vollständig verhindert.

3. Vorrichtung nach Anspruch 1, **dadurch gekennzeichnet, dass** das durch den Suszeptor (16) gebildete Gefäß als Wärmebehandlungskammer mit homogenem Temperaturfeld ausgebildet ist, in welchem sich das oder die zu erwärmenden Formteile (18) befinden.

4. Vorrichtung nach einem der vorhergehenden Ansprüche, **dadurch gekennzeichnet, dass** der Suszeptor (16) elektromagnetische Strahlung absorbiert und Wärmestrahlung emittiert.

5. Vorrichtung nach einem der vorhergehenden Ansprüche, **dadurch gekennzeichnet, dass** zwischen Suszeptor (16) und Formteil (18) ein anderer Wärmeübertragungsmechanismus als zwischen Mikrowellenofen (10) und Suszeptor (16) eingesetzt ist, insbesondere Konvektion, Strahlung und/oder Wärmeleitung.

6. Vorrichtung nach einem der vorhergehenden Ansprüche, **dadurch gekennzeichnet, dass** die von dem Suszeptor (16) emittierte Strahlung ein Emissionsmaximum im Infrarotbereich hat.

7. Vorrichtung nach einem der vorhergehenden Ansprüche, **dadurch gekennzeichnet, dass** der Suszeptor (16) absorbierend und/oder dicht für elektromagnetische Strahlungen ausgebildet ist, insbesondere jedoch mindestens eine Öffnung aufweist.

8. Vorrichtung nach einem der vorhergehenden Ansprüche**, dadurch gekennzeichnet, dass** die Mikrowellen-Abschirmung aus einem Mikrowellen stark absorbierenden und/oder einem Mikrowellen reflektierenden Material besteht, insbesondere Metall aufweist.

9. Vorrichtung nach einem der vorhergehenden Ansprüche, **dadurch gekennzeichnet, dass** die Mikrowellen-Abschirmung durch ein Material mit einem besonders hohen Absorptionskoeffizienten für Mikrowellen-Strahlung (14), insbesondere Siliziumkarbid, hergestellt ist.

10. Vorrichtung nach einem der vorhergehenden Ansprüche, **dadurch gekennzeichnet, dass** das Formteil (18) innerhalb des Gefäßes oder der Wärmebehandlungskammer auf dem Suszeptor (16), gegebenenfalls über ein geeignetes Auflagematerial, insbesondere kraftfrei, mit einem gleichmäßigen Wärmekontakt zum Suszeptor (16) aufliegt.

11. Vorrichtung nach einem der vorhergehenden Ansprüche, **dadurch gekennzeichnet, dass** der Suszeptor (16) und/oder eine aufgebrachte Schicht an der Innenseite des Gefäßes oder der Wärmebehandlungskammer als guter Wärmeleiter ausgebildet ist und die Temperatur im Innenraum des Suszeptors (16) vergleichmäßigt.

12. Vorrichtung nach einem der vorhergehenden Ansprüche, **dadurch gekennzeichnet, dass** der Suszeptor (16) - und ggf. der Wärmeleiter - einen Anschlussflansch für Gas aufweist, von welchem Gas der Suszeptor (16), und ggf. der Wärmeleiter, durchströmbar ist.

13. Vorrichtung nach einem der vorhergehenden Ansprüche, **dadurch gekennzeichnet, dass** die Mikrowellen-Abschirmung innen an dem Suszeptor (16) und diesen auskleidend angebracht ist.

14. Vorrichtung nach einem der vorhergehenden Ansprüche, **dadurch gekennzeichnet, dass** die Mikrowellenabschirmung einstückig mit dem Suszeptor (16), insbesondere an seiner Innenwand durch Nachverdichtung dieser, hergestellt ist.

15. Vorrichtung nach einem der vorhergehenden Ansprüche, **dadurch gekennzeichnet, dass** das Gefäß aus mindestens zwei Teilen und/oder aus mindestens zwei Schichten aufgebaut ist und/oder dass die Abschirmung gemäß Anspruch 2 bei Temperaturen von 0 bis 1750 Grad abschirmend wirkt.
